# EUROPÄISCHE PATENTSCHRIFT

(11) **EP 0 710 445 B1**
(45) Veröffentlichungstag und Bekanntmachung des Hinweises auf die Patenterteilung: **26.05.1999**
(21) Anmeldenummer: 95115602.5
(22) Anmeldetag: 04.10.1995
(51) Int. Cl.: A22C 25/14

(54) **Verfahren zum maschinellen Entweiden von Fischen und Maschine zur Durchführung des Verfahrens**
Method and device for mechanically eviscerating fish
Procédé et dispositif pour l'éviscération mécanique de poissons

(30) Priorität: 04.11.1994 DE 4439158
(43) Veröffentlichungstag der Anmeldung: 08.05.1996
(73) Patentinhaber: NORDISCHER MASCHINENBAU RUD. BAADER GMBH + CO KG, 23560 Lübeck (DE)
(72) Erfinder: Hahn, Peter, D-23564 Lübeck (DE); Nüske, Klaus Dieter, D-23617 Stockelsdorf (DE); Pinkerneil, Günther, D-23566 Lübeck (DE)
(74) Vertreter: Schaller, Hans-Jörg

(56) Entgegenhaltungen:
- EP-A- 0 398 017
- DE-A- 4 100 319
- DE-B- 1 293 419
- DE-B- 1 679 041
- SU-A- 316 423

## Beschreibung

Die Erfindung betrifft ein Verfahren zum maschinellen Entweiden von Fischen und eine Maschine zur Durchführung des Verfahrens.

Aus dem SU-A-254 038 ist eine Maschine bekannt, bei welcher ein endloser Förderer mit Quermulden Verwendung findet, die der Aufnahme der Fische mit ihrem Rücken nach unten und ihrer Längsachse quer zur Förderrichtung dienen. Die Fische werden durch einen von der Bauchseite her bis an die Wirbelsäule geführten Einschnitt im Bereich der Kiemenhöhle geöffnet und anschließend im Untertrum des Förderers durch ein Entweidewerkzeug bearbeitet, das einen Rotationskörper mit wendelförmig an diesem hintereinander angeordneten und auf einer Kreisbahn geführten Werkzeugen umfaßt. Dabei ist das erste Werkzeug als Dorn mit in Umlaufrichtung des Rotationskörpers vorausweisender Spitze ausgeführt, von der eine sich der Umlaufachse des Rotationskörpers spiralförmig nähernde Innenschneide ausgeht. An dieses Werkzeug schließt sich als zweites ein Bürstenkamm an. Rotationskörper und Förderer sind derart synchronisiert angetrieben und einander zugeordnet, daß die Spitze des ersten Werkzeuges in die durch Biegung des angeschnittenen Kopfes zum Nacken hin freigelegte Kiemenhöhlen-Querschnittsöffnung eindringt und am Anus wieder austritt, so daß durch die Innenschneide eine Längsöffnung der Bauchhöhle zwischen der Eintritt- und Austrittstelle des Dorns erfolgt. Diesem Vorgang schließt sich das Entfernen der Eingeweide durch Ausbürsten der geöffneten Bauchhöhle an

Aus dem SU-A-316 423 ist weiter eine der vorbeschriebenen ähnliche Einrichtung bekannt, bei der der Fisch in Schwimmlage gehalten und quer zu seiner Längsachse gefördert wird. Das Entweidewerkzeug vorstehend beschriebener Bauart bearbeitet den Fisch von unten.

Bei beiden Einrichtungen ist das erreichbare Entweideergebnis nicht befriedigend. Dies hat seine Ursache insbesondere darin, daß der Enddarm nicht gezielt vom Körper getrennt und der Fisch durch das Längsöffnen der Bauchhöhle in seinem Querschnitt destabilisiert wird, so daß ein über den ganzen Querschnitt der Bauchhöhle wirksames Ausräumen nicht möglich ist. Darüber hinaus sind diese Einrichtungen bei Fischen der Spezies Ictalurus punctatus aufgrund der anatomischen Gegebenheiten im Bereich der Analöffnung und allgemein der Bauchhöhle nicht anwendbar.

Es ist die Aufgabe der Erfindung, ein Verfahren und eine Einrichtung anzugeben, die bei schonender Behandlung der Fische ein einwandfreies Entweideergebnis, insbesondere auch bei Fischen der Spezies Ictalurus punctatus, ermöglicht.

Diese Aufgabe wird erfindungsgemäß durch ein Verfahren gelöst, welches die Verfahrensschritte umfaßt: Öffnen der Bauchhöhle im Bereich der Analöffnung unter Durchtrennen des Enddarmes, vor oder nach Durchführung dieses Verfahrensschrittes Öffnen der Kiemenhöhle durch einen transversalen Einschnitt unter Durchtrennen des Schlundes und Öffnen der Blutbahn, Entfernen der Eingeweide von der Kiemenhöhle her durch die mittels des ersten Verfahrensschrittes geschaffene Öffnung hindurch oder von dieser Öffnung her durch die Kiemenhöhle hindurch, wobei bei der Bearbeitung von Fischen der Spezies Ictalurus punctatus das Öffnen der Bauchhöhle im Bereich der Analöffnung durch Heraustrennen der die Bauchflossen tragenden Knochen- oder Knorpelplatte erfolgt.

Der Vorteil dieses Verfahrens besteht insbesondere darin, daß die Bauchhöhle während des Ausräumvorgangs in ihrem Querschnitt geschlossen bleibt, so daß das Ausräumen unter einem "Flaschenbürsteneffekt" vorsichgeht mit der Wirkung einer sicheren Löslösung der Bauchhäute sowie der Öffnung der Blutbahn im Bauchhöhlenbereich.

Zur Durchführung dieses Verfahrens ist eine Maschine geeignet, wie sie in dem Haupt-Vorrichtungsanspruch allgemein beschrieben ist.

Vorteilhafte Ausführungsbeispiele sind in den übrigen Unteransprüchen beschrieben.

Die erfindungsgemäße Maschine wird nachstehend anhand eines in der Zeichnung dargestellten Ausführungsbeispiels näher erläutert. Es zeigen:
- Fig. 1: eine vereinfachte Gesamtansicht der Maschine in perspektivischer Darstellung,

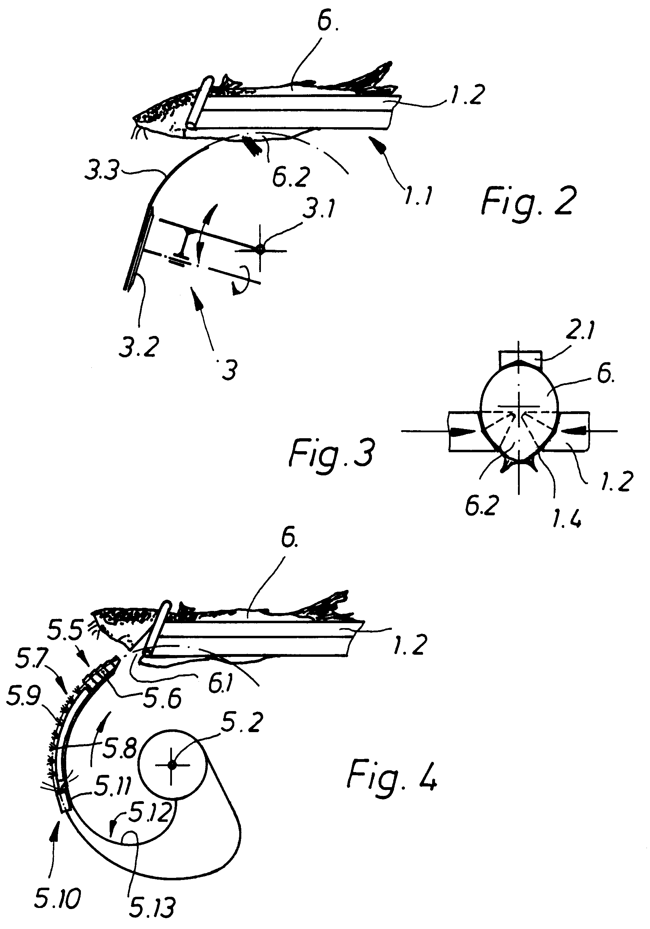

- Fig.2: einen Teilquerschnitt durch die Maschine im Bereich der Einrichtung zum Öffnen der Bauchhöhle im Bereich der Analöffnung
- Fig. 3: eine Stirnansicht einer Mulde mit zugeordnetem Niederhalteelement und
- Fig.4: einen Teilquerschnitt durch die Maschine im Bereich der Einrichtung zum Ausräumen der Bauchhöhle.

In einem nicht näher dargestellten Geste einer Fischbearbeitungsmaschine sind angeordnet:: ein die Fische fördernder Endlosförderer 1 , ein dem Obertrum des Förderers 1 zugeordneter Niederhalteförderer 2 , sowie Einrichtungen zum Öffnen der Bauchhöhle im Bereich der Analöffnung, nachstehend als Analschnitteinrichtung 3 bezeichnet, zum Öffnen der Kiemenhöhle, nachstehend als Kehleinrichtung 4 bezeichnet, und zum Ausräumen der Bauchhöhle, nachstehend als Entweideeinrichtung 5 bezeichnet.

Der Endlosförderer 1 ist auf geeignete Weise umlaufend angetrieben und mit einer Vielzahl Mulden 1.1 , die der Aufnahme der zu bearbeitenden Fische in Schwimmlage und mit ihrer Längsachse quer zur Fördereinrichtung dienen, ausgestattet.

Jede Mulde 1.1 besteht aus einem Paar, in der Förderebene synchron zueinander und unter Federkraft gegeneinander gehaltener Muldenelemente 1.2 , die eine der Gestalt des Fisches in dessen Bauchbereich angepaßte, im wesentlichen V-förmige und sich zu einem Muldenende hin verjüngende Aufnahmemulde 1.3 bilden, die an ihrem Grunde einen veränderlichen Spalt 1.4 aufweist. Im Stirnbereich des anderen Muldenendes ist jedes Muldenelement 1.2 mit einem als Ausrichtmittel wirksamen Gabelelement 1.5 versehen, welches jeweils ein über die Muldenelemente 1.2 aufragendes Führungsteil 1.6 umfaßt, so daß die Gabelelemente 1.5 paarweise und in Stirnansicht der Mulde 1.1 betrachtet die Form eines Y mit gespaltetem Schaft bilden. Die Mulden 1.1 werden im Bereich des Obertrums des Förderers 1 in einer horizontalen Ebene geführt.

Der Niederhalteförderer 2 ist mit dem Förderer 1 synchron umlaufend angetrieben und mit Niederhalteelementen 2.1 bestückt, wobei im Bereich des Obertrums des Förderers 1 jeweils ein Niederhalteelement 2.1 einer Mulde 1.1 des Förderers 1 zugeordnet ist und diese während des Bearbeitungsprozesses begleitet. Jedes Niederhalteelement 2.1 besteht aus einem an seiner Unterseite quer zur Förderrichtung dachförmig ausgearbeiteten Formteil, wobei Stacheln im Bereich der Firstlinie vorgesehen sein können. Der Niederhalteförderer 2 ist so geführt, daß die Niederhalteelemente 2.1 mit ihrer Unterseite mit dem Fischrücken in Kontakt treten, wobei der Andruck durch eine Anzahl federnder Andrückelemente, von denen lediglich diejenigen 2.2 und 2.3 dargestellt sind, regulierbar ist.

Die Analschnitteinrichtung 3 besteht aus einem um eine zu der Förderebene und Förderrichtung parallel verlaufende, gestellfeste Achse 3.1 schwenkbaren und unterhalb des Obertrums des Förderers 1 angeordneten Aggregat mit einem auf geeignete Weise angetriebenen Kreismesser 3.2 und einem diesem vorgelagerten Führungsschuh 3.3. Der Führungsschuh 3.3 weist einen in Schwenkrichtung verlaufenden Führungsspalt 3.4 auf, dessen rückwärtiges Ende durch das Kreismesser 3.2 gebildet ist, dessen Schnittebene im übrigen in einer zu der Förderrichtung des Förderers 1 parallelen Ebene verläuft. Der Führungsspalt 3.4 ist seitlich von Kanten 3.5 begrenzt, die als gestumpfte Schneiden ausgebildet sind. Der Führungsschuh 3.3 ist bis in den Bereich der Schneide 3.6 des Kreismessers 3.2 entsprechend einem Zylindermantelabschnitt ausgeführt, dessen Achse die Achse 3.1 ist und der die Unterfläche der Mulden 1.1 annähernd tangiert. Die Schwenkung der Analschnitteinrichtung 3 erfolgt durch ein geeignetes, nicht gezeigtes Stellglied, wobei der Schwenkbewegung gleichzeitig eine Verschiebekomponente in Richtung der Achse 3.1 überlagert ist, die eine synchrone Begleitbewegung zwischen der Einrichtung 3 und den Mulden 1.1 während des Einschwenkens in die Aktivstellung bewirkt.

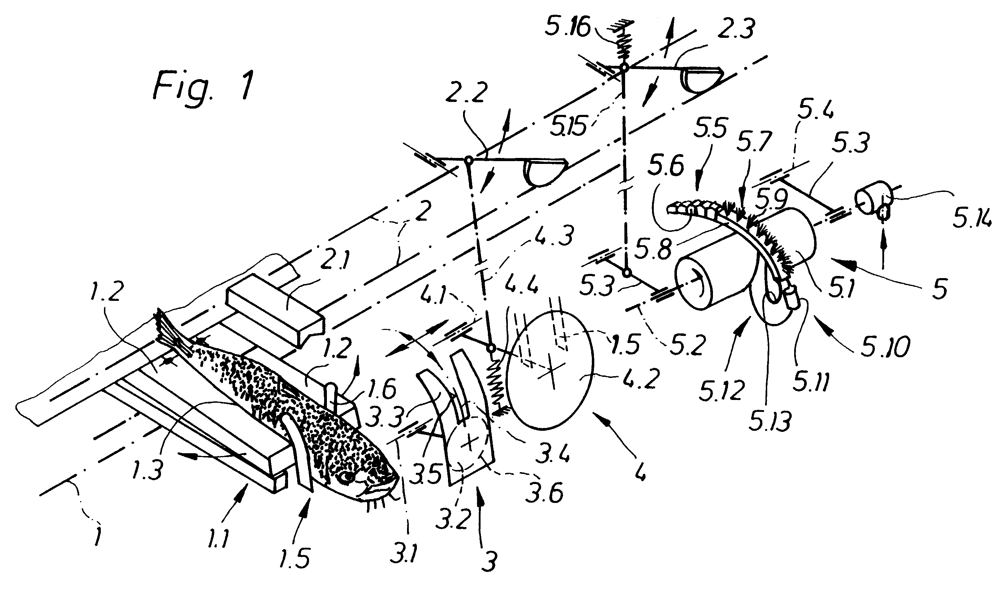

Die Kehleinrichtung 4 besteht aus einem um eine zu der Förderrichtung parallel verlaufende, gestellfeste Achse 4.1 schwenkbaren und unterhalb des Obertrums des Förderers 1 angeordneten Aggregat mit einem auf geeignete Weise angetriebenen Kreismesser 4.2 , dessen Schnittebene parallel zu der Förderrichtung des Förderers 1 und unmittelbar neben der Bahn der Gabelelemente 1.5 verlaufend ausgerichtet ist. Die Kehleinrichtung 4 ist, wie symbolisch in Fig. 1 dargestellt, mittels eines Koppelmechanismus' 4.3 mit dem im Bereich über der Einrichtung 4 angeordneten Andrückelemente 2.2 des Niederhalteförderers 2 gelenkig verbunden, so daß die Einrichtung 4 in Abhängigkeit von der durch den jeweiligen Fische bewirkten Verdrängung des Andrückelementes 2.2 angehoben, d. h. bezüglich der Schnittiefe des Kreismessers 4.2 gesteuert wird. Dabei sorgt eine Rückholfeder 4.4 für eine Rücksteuerung der Einrichtung 4 jeweils nach Durchgang des Fisches.

Die Entweideeinrichtung 5 besteht aus einem auf geeignete Weise umlaufend angetriebenen Rotationskörpers 5.1 , welcher unterhalb des Obertrums des Förderers 1 angeordnet ist. Die Umlaufachse 5.2 des Rotationskörpers 5.1 ist an einem Paar horizontal ausgerichteter Lenker 5.3 gelagert, die um eine gestellfeste Achse 5.4 schwenkbar sind und die Umlaufachse 5.2 des Rotationskörpers 5.1 in einer zu der Förderebene des Förderers 1 parallelen Ebene und zu dessen Förderrichtung divergierend verlaufend tragen. Der Rotationskörper 5.1 ist an seinem Umfang mit in schraubenwendelförmiger Ausrichtung hintereinander angeordneten Werkzeugen versehen, welche freitragend ausgeführt sind und auf einer zu der Umlaufachse 5.2 des Rotationskörpers 5.1 konzentrischen und zwischen die Muldenelemente 1.2 eintauchenden Kreisbahn geführt sind. Dabei umfassen die Werkzeuge in ihrer der Aktivierungsfolge entsprechenden Anordnung: ein Räumwerkzeug 5.5 , bestehend aus einem der Querschnittsform der Bauchhöhle angepaßten Kratzerelement 5.6 , dessen Stirnseite keilförmig verjüngt und dessen Außenflächen vorausgriffig ausgebildet sind, ein Bürstenwerkzeug 5.7 , bestehend aus einem mit nach außen weisenden Borsten 5.9 besetzten Segmentkörper 5.8 , eine Hochdruck-Sprüheinrichtung 5.10 mit einer einen Strahlenfächer erzeugenden Wasserstrahldüse 5.11 und ein Schneidwerkzeug 5.12 mit in Drehrichtung des Rotationskörpers 5.1 weisender und sich sichelförmig in Richtung auf dessen Umlaufachse 5.2 erstreckender Schneide 5.13 . Die Wasserstrahldüse 5.11 wird über eine Drehdichtung 5.14 mit Hochdruckwasser versorgt. Die Entweideeinrichtung 5 ist wie symbolisch in Fig. 1 dargestellt, mittels eines Koppelmechanismus' 5.15 mit dem im Bereich über der Einrichtung 5 angeordneten Andrückelement 2.3 des Niederhalteförderers 2 gelenkig verbunden, so daß die Einrichtung 5 in Abhängigkeit von der durch den jeweiligen Fisch bewirkten Verdrängung des Andrückelementes 2.3 angehoben, d. h. bezüglich der Arbeitstiefe der Werkzeuge 5.5 , 5.7 und 5.10 gesteuert wird. Dabei sorgt eine Entlastungsfeder 5.16 für einen Ausgleich des Gewichtes der Entweideeinrichtung 5 .

Die Wirkungsweise der erfindungsgemäßen Maschine wird nachstehend unter Verfolgung des Durchlaufs eines Fisches der Spezies Ictalurus punctatus beschrieben:

Der zu bearbeitende Fisch 6 wird mit dem Bauch nach unten und dem Schwanz nach hinten zwischen die Führungsteile 1.6 des Gabelelementes 1.5 eingelegt, wobei der Fisch so positioniert wird, daß die Führungsteile 1.6 die Flanken des Fisches unmittelbar hinter den Kiemendeckeln tangieren. Der Fisch wird dann in die Aufnahmemulde 1.3 gedrückt, wobei die Muldenelemente 1.2 auseinander gedrängt werden und sich das Gabelelement 1.5 in die hinter den Kiemendeckeln vorhandene Weichstruktur eindrückt.

Der so fixierte und positionierte Fisch wird nun durch den Förderer 1 vorbewegt, wobei zunächst eines der Niederhalteelemente 2.1 des Niederhalteförderers 2 mit dem Fischrücken in Kontakt gebracht wird. Dabei wird ein durch die Andrückelemente entsprechend Bezugszeichen 2.2 oder 2.3 erzeugter definierter Andruck erreicht, der bewirkt, daß die die Knochen- oder Knorpelplatte 6.2 umfassende Bauchstruktur des Fisches, wie in Fig, 2 und 3 gezeigt, durch den Spalt 1.4 am Grund der Aufnahmemulde 1.3 gedrängt wird. Der Fisch gelangt so in den Wirkbereich der Analschnitteinrichtung 3 , die im Augenblick der Übereinstimmung der Längsachse des Fisches mit der Symmetrieachse der Einrichtung 3 hochzuschwenken beginnt. Dabei bewirkt der Führungsschuh 3.3 , daß die Knochen- oder Knorpelplatte 6.2 übergriffen und aufgesammelt wird, bevor diese durch das Kreismesser 3.2 abgeschert wird mit dem Effekt, daß nun die Bauchhöhle des Fisches im Bereich der Analöffnung geöffnet und der Enddarm abgetrennt sind.

Anschließend gelangt der Fisch in den Wirkbereich des Kehlwerkzeuges 4 , welches unmittelbar neben dem Gabelelement 1.5 der Mulde 1.1 einen Querschnitt in den Fisch ausführt, der bis an das Rückgrat geführt wird, so daß alle in diesem Querschnittsbereich befindlichen Strukturen getrennt werden. Über die Rückenhöhe des Fisches erfolgt dabei eine Anpassung der Eindringtiefe des Kreismessers 3.2 an die Größe des zu bearbeitenden Fisches.

Mit so geöffneter Kiemenhöhle 6.1 erreicht der Fisch schließlich die Entweideeinrichtung 5 , wobei durch nicht gezeigte Mittel vorher dafür gesorgt wurde, daß die Bauchhöhle durch Biegen des Kopfes in den Nacken von der Schnittfläche des Kehlwerkzeuges 4 her in Längsrichtung zugänglich ist. Der Umlauf des Rotationskörpers 5.1 der Entweideeinrichtung 5 ist mit dem Förderfortschritt des Förderers 1 so synchronisiert und das Steigungsmaß der wendelförmigen Anordnung der Bearbeitungswerkzeuge dieser Einrichtung 5 so abgestimmt, daß das erstwirksame Räumungswerkzeug 5.5 bei Ankunft des Fisches bereitsteht, passend zu dessen Symmetrieachse von der Kehlschnittfläche her in die Bauchhöhle einzudringen. Bei weiterem Förderfortschnritt werden nun die Eingeweide durch die mittels der Analschnitteinrichtung 3 geschaffene Bauchhöhlenöffnung hindurch ausgeschoben, wobei eine Nachreinigung durch das nachfolgend wirksame Bürstenwerkzeug 5.7 und die Hochdruck-Sprüheinrichtung 5.10 erfolgt. Abschließend wird die Bauchhöhle in ihrer Gesamtlänge mittels des Schneidwerkzeuges 5.12 durch einen von innen nach außen geführten Längsschnitt geöffnet.

Dadurch , daß das Reinigen der Bauchhöhle in deren sonst geschlossenem Zustand geschieht, gelingt es, daß das allgemein problematische Entfernen der die Blutbahn abdeckenden Lederhaut, sowie das Öffnen der Blutbahn einwandfrei und ohne Beschädigung des Fisches beherrscht wird.

Der so bearbeitete Fisch kann bedarfsweise durch Einsatz eines nicht gezeigten gestellfest montierten Köpfmessers geköpft werden.

### Bezugszeichenliste

- **1**: **Endlosförderer**
- 1.1: Mulde
- 1.2: Muldenelement
- 1.3: Aufnahmeelement
- 1.4: Spalt
- 1.5: Gabelelement
- **1.6**: Führungsteil
- **2**: **Niederhalteförderer**
- 2.1: Niederhalteelement
- 2.2: Andrückelement
- 2.3: Andrückelement
- **3**: **Analschnitteinrichtung**
- 3.1: Achse
- 3.2: Kreismesser
- 3.3: Führungsschuh
- 3.4: Führungsspalt
- 3.5: Kante
- **3.6**: Schneide
- **4**: **Kehleinrichtung**
- 4.1: Achse
- 4.2: Kreismesser
- 4.3: Koppelmechanismus
- **4.4**: Rückholfeder
- **5**: **Entweideeinrichtung**
- 5.1: Rotationskörper
- 5.2: Umlaufachse
- 5.3: Lenker
- 5.4: Achse
- 5.5: Räumwerkzeug
- 5.6: Kratzerelement
- 5.7: Bürstenwerkzeug
- 5.8: Segmentkörper
- 5.9: Borsten
- 5.10: Hochdruck-Sprüheinrichtung
- 5.11: Wasserstrahldüse
- 5.12: Schneidwerkzeug
- 5.13: Schneide
- 5.14: Drehdichtung
- 5.15: Koppelmechanismus
- 5.16: Entlastungsfeder
- **6**: **Fisch**
- 6.1: Kiemenhöhle
- 6.2: Knochen- oder Knorpelplatte

## Patentansprüche

1. Verfahren zum maschinellen Entweiden von Fischen, umfassend die Verfahrensschritte
a) Öffnen der Bauchhöhle im Bereich der Analöffnung unter Durchtrennen des Enddarmes.
b) vor oder nach Durchführung des Verfahrensschrittes a) Öffnen der Kiemenhöhle (6.1) durch einen transversalen Einschnitt unter Durchtrennen des Schlundes und Öffnen der Blutbahn
c) Entfernen der Eingeweide von der Kiemenhöhle (6.1) her durch die mittels Verfahrensschritt a) geschaffene Öffnung hindurch oder von dieser Öffnung her durch die Kiemenhöhle (6.1) hindurch.

2. Verfahren nach Anspruch 1 zum maschinellen Entweiden von welsartigen Fischen, beispielsweise Catfish (Ictalurus punctatus), **dadurch gekennzeichnet,** daß das Öffnen der Bauchhöhle im Bereich der Analöffnung durch Heraustrennen der die Bauchflossen tragenden Knochen- oder Knorpelplatte (6.2) erfolgt.

3. Maschine zur Durchführung des Verfahrens nach Anspruch 1 oder 2 , umfassend einen Förderer (1) mit Mulden (1.1) zur Aufnahme und Förderung der Fische mit ihrer Längsachse quer zur Förderrichtung sowie Einrichtungen (3, 4, 5) zum Öffnen der Kiemenhöhle (6.1) unter Durchtrennen des Schlundes sowie Öffnen der Blutbahn, zum Öffnen der Bauchhöhle im Bereich der Analöffnung, sowie zum Ausräumen der Bauchhöhle, wobei die letztere Einrichtung einen mit dem Förderer (1) synchron umlaufend angetriebenen Rotationskörper (5.1) mit an seinem Umfang in schraubenwendelförmiger Ausrichtung hintereinander angeordneten Werkzeugen (5.5, 5.7, 5.10, 5.12) aufweist, welche freitragend angeordnet und auf einer zu der Umlaufachse (5.2) des Rotationskörpers (5.1) im wesentlichen konzentrischen und die Längsachse der Fische tangierenden Kreisbahn geführt sind und welche Werkzeuge in ihrer der Aktivierungsfolge entsprechenden Anordnung umfassen:
- ein Räumwerkzeug (5.5) , bestehend aus einem der Querschnittsform der Bauchhöhle angepaßten Kratzersegment (5.6) mit keilförmig verjüngter Stirnseite und griffiger Außenfläche,
- ein Bürstenwerkzeug (5.7) , bestehend aus einem mit nach außen weisenden Borsten (5.9) besetzten Segmentkörper (.58)
- eine Hochdruck-Sprüheinrichtung (5.10) mit einer einen Strahlfächer erzeugenden Wasserstrahldüse (5.11) , und
- ein Schneidwerkzeug (5.12) mit in Drehrichtung des Rotationskörpers (5.1) weisender und sich im wesentlichen sichelförmig in Richtung auf dessen Umlaufachse (5.2) erstreckender Schneide (5.13).

4. Maschine nach Anspruch 3 , **dadurch gekennzeichnet,** daß mindestens im Wirkbereich der Bearbeitungswerkzeuge mit dem Rücken der Fische in Kontakt tretende Niederhalteelemente (2.1 vorgesehen sind.

5. Maschine nach Anspruch 4 , **dadurch gekennzeichnet,** daß die Niederhalteelemente Bestandteil eines durch Andrückelemente (2.2 und 2.3) gestützten Niederhalteförderers (2) sind, wobei jeweils ein Niederhalteelement (2.1) einer Mulde (1.1) des Förderers (1) zugeordnet ist und diese synchron begleitet.

6. Maschine nach einem der Ansprüche 3 bis 5 , **dadurch gekennzeichnet,** daß die Mulden (1.1) ausgebildet sind zur Aufnahme und Förderung der Fische in Schwimmlage, wobei Ausrichtmittel zum Positionieren der Fische in bezug auf die Lage ihrer Kiemenhöhle vorgesehen sind.

7. Maschine nach Anspruch 6 , **dadurch gekennzeichnet,** daß die Ausrichtmittel ein Paar den Fisch zwischen sich aufnehmender Gabelelemente (1.5) umfaßt, welche federnd auseinander drängbar sind.

8. Maschine nach Anspruch 6 oder 7 , **dadurch gekennzeichnet,** daß die Mulden (1.1) an ihrem Grunde einen den Analbereich der Fische freihaltende Spalt (1.4) aufweisen.

9. Maschine nach einem der Ansprüche 3 bis 8 , **dadurch gekennzeichnet,** daß die Einrichtung (3) zum Öffnen der Bauchhöhle im Bereich der Analöffnung ein Kreismesser (3.2) mit einem Führungsschuh (3.3) umfaßt, welches in einer die Unterseite der Mulden annähernd tangierenden Ebene längs der Mulde (1.1) führbar ist.

10. Maschine nach Anspruch 9 , **dadurch gekennzeichnet,** daß der Führungsschuh (3.3) einen in Führungsrichtung verlaufenden und sich vor dem Kreismesser (3.2) erstreckenden Führungsspalt (3.4) aufweist, dessen rückwärtiges Ende durch das Kreismesser (3.2) gebildet ist und dessen seitlich begrenzende Kanten (3.5) als gestumpfte Schneiden ausgebildet sind.

11. Maschine nach einen der Ansprüche 3 bis 7 , **dadurch gekennzeichnet,** daß die Einrichtung (4) zum Öffnen der Kiemenhöhle und Durchtrennen des Schlundes und Öffnen der Blutbahn ein Kreismesser (4.2) umfaßt, dessen Schnittebene zur Förderrichtung der Mulden (1.1) parallel und unmittelbar neben der Bahn der Gabelelemente (1.5) der Ausrichtmittel verläuft.

12. Maschine nach einem der Ansprüche 3 4 , 5 oder 11 , **gekennzeichnet durch** einen Koppelmechanismus (4.3) , welcher die Einrichtung (4) zum Öffnen der Kiemenhöhle mit dem in deren Bereich wirksamen Andrückelement (2.2) im Sinne einer Anpassung der Einschnittiefe des Kreismessers (4.2) in Abhängigkeit von der Rückenhöhle des jeweils zu bearbeitenden Fisches koppelt.

13. Maschine nach einem der Ansprüche 3 bis 5 , **gekennzeichnet durch** einen Koppelmechanismus, welcher die Einrichtung (5) zum Ausräumen der Bauchhöhle mit dem in deren Bereich wirksamen Andrückelement (2.3) im Sinne einer Anpassung der Arbeitsebene der Ausräumwerkzeuge in Abhängigkeit von der Rückenhöhe des jeweils zu bearbeitenden Fisches koppelt.

## Claims

1. Method of mechanically degutting fish, comprising the method steps
a) opening the belly cavity in the region of the anal opening whilst cutting through the intestine end,
b) opening the gill cavity (6.1) by a transverse incision, whilst cutting through the gullet and opening the blood stream, before or after performance of method step a), and
c) removal of the viscera from the gill cavity (6.1) through the opening produced by means of method step a) or from this opening through the gill cavity (6.1).

2. Method according to claim 1 for mechanically degutting catfish-like fish, for example catfish (Ictalurus punctatus), characterised in that the opening of the belly cavity in the region of the anal opening is effected by cutting out the bone or cartilage plate (6.2) carrying the ventral fins.

3. Machine for carrying out the method according to claim 1 or claim 2, comprising a conveyor (1) with troughs (1.1) for receiving and conveying the fish with their longitudinal axes transverse to the conveying direction as well as devices (3, 4, 5) for opening the gill cavity (6.1) whilst cutting through the gullet as well as opening the bloodstream, for opening the belly cavity in the region of the anal opening as well as for evacuating the belly cavity, wherein the latter device comprises a rotational body (5.1), which is driven to rotate synchronously with the conveyor (1), with tools (5.5, 5.7, 5.10, 5.12), which are arranged at its circumference one behind the other in helical alignment and which are arranged to be self-supporting and guided on a circular path substantially concentric with the axis (5.2) of rotation of the rotational body (5.1) and tangential to the longitudinal axis of the fish, which tools in their arrangement corresponding to the sequence of action comprise:
- an evacuating tool (5.5) consisting of a scraper segment (5.6), which is matched to the cross-sectional shape of the belly cavity, with end face tapering in wedge shape and gripping outer surface,
- a brush tool (5.7) consisting of a segment body (5.8) equipped with outwardly facing brushes (5.9),
- a high-pressure spray device (5.10) with a water jet nozzle (5.11) producing a fan-shaped spray, and
- a cutting tool (5.12) with cutting edge (5.13) pointing in rotational direction of the rotational body (5.1) and extending substantially in sickle-shape in direction of the axis (5.2) of rotation thereof.

4. Machine according to claim 3, characterised in that holding-down elements (2.1) coming into contact with the back of the fish are provided at least in the region of action of the processing tools.

5. Machine according to claim 4, characterised in that the holding-down elements are a component of a holding-down conveyor (2) supported by presser elements (2.2 and 2.3), wherein each holding-down element (2.1) is associated with a respective trough (1.1) of the conveyor (1) and accompanies this synchronously.

6. Machine according to one of claims 3 to 5, characterised in that the troughs (1.1) are constructed for receiving and conveying the fish in swimming position, wherein aligning means for positioning the fish with respect to the position of their gill cavity are provided.

7. Machine according to claim 6, characterised in that the aligning means comprise a pair of fork elements (1.5) which receive the fish therebetween and can be resiliently urged apart.

8. Machine according to claim 6 or 7, characterised in that the troughs (1.1) have at their base a gap (1.4) keeping free the anal region of the fish.

9. Machine according to one of claims 3 to 8, characterised in that the device (3) for opening the belly cavity in the region of the anal opening comprises a circular knife (3.2) with a guide shoe (3.3), which is guidable in a plane, which is approximately tangential to the underside of the troughs, longitudinally of the trough (1.1)

10. Machine according to claim 9, characterised in that the guide shoe (3.3) has a guide gap (3.4), which runs in a guidance direction and extends in front of the circular knife (3.2) and the rearward end of which is formed by the circular knife (3.2), whilst its lateral boundary edges (3.5) are formed as truncated blades.

11. Machine according to one of claims 3 to 7, characterised in that the device (4) for opening the gill cavity and cutting through the gullet and opening the bloodstream comprises a circular knife (4.2), the cutting plane of which runs parallel to the conveying direction of the troughs (1.1) and directly adjacent to the path of the fork elements (1.5) of the aligning means.

12. Machine according to one of claims 3, 4, 5 and 11, characterised by a coupling mechanism (4.3) which couples the device (4) for opening the gill cavity with the presser element (2.2), which is effective in the region thereof, in the sense of an adaptation of the incision depth of the circular knife (4.2) in dependence on the back height of the respective fish to be processed.

13. Machine according to one of claims 3 to 5, characterised by a coupling mechanism which couples the device (5) for evacuating the belly cavity with the presser element (2.3), which is effective in the region thereof, in the sense of an adaptation of the working plane of the evacuating tools in dependence on the back height of the respective fish to be processed.

## Revendications

1. Procédé pour le retrait mécanique des viscères de poissons, comprenant les étapes consistant à :
a) ouvrir la cavité ventrale dans la zone de l'ouverture anale tout en séparant l'extrémité de l'intestin,
b) avant ou après l'exécution de l'étape opératoire a), ouvrir la cavité branchiale (6.1) au moyen d'une incision transversale, moyennant le sectionnement de la gorge et l'ouverture du circuit sanguin,
c) retirer les viscères à partir de la cavité branchiale (6.1) à travers l'ouverture créée à l'aide de l'étape opératoire a), ou bien à partir de cette ouverture à travers la cavité branchiale (6.1).

2. Procédé selon la revendication 1, pour le retrait mécanique des viscères de poissons du type silures, notamment de poissons-chats (Ictalurus punctatus), caractérisé en ce que l'ouverture de la cavité ventrale s'effectue dans la zone de l'ouverture anale par séparation de la plaque osseuse ou cartilagineuse (6.2) portant les nageoires abdominales.

3. Machine pour la mise en oeuvre du procédé selon la revendication 1 ou 2, comprenant un convoyeur (1) pourvu d'auges (1.1) servant à recevoir et convoyer les poissons et dont l'axe longitudinal est transversal à la direction de convoyage, et des dispositifs (3, 4, 5) pour ouvrir la cavité branchiale (6.1) par sectionnement de la gorge et ouverture du circuit sanguin, pour l'ouverture de la cavité ventrale au niveau de l'ouverture anale, ainsi que pour évider la cavité ventrale, ce dernier dispositif comportant un corps rotatif (5.1) entraîné en rotation d'une manière synchrone avec le convoyeur (1) et comportant des outils (5.5, 5.7, 5.10, 5.12) qui sont disposés les uns derrière les autres sur la périphérie de ce corps selon une disposition hélicoïdale, sont disposés en porte-à-faux et sont guidés sur une voie circulaire, qui est essentiellement concentrique à l'axe de rotation (5.2) du corps rotatif (5.1) et tangente à l'axe longitudinal des poissons, lesquels outils comprenant, dans leur disposition correspondant à la séquence d'activation :
- un outil d'évidage (5.5), constitué par un segment de racloir (5.6), qui est adapté à la forme en coupe transversale de la cavité ventrale et comprend une surface frontale rétrécie avec une forme conique et une surface extérieure accrochante,
- un outil formant brosse (5.7) constitué par un corps en forme de segment (5.8) garni de poils (5.9) dirigés vers l'extérieur,
- un dispositif de pulvérisation à haute pression (5.10) comportant une buse (5.11) délivrant un jet d'eau et produisant un jet en éventail, et
- un outil de coupe (5.12) comportant un tranchant (5.13), qui s'étend dans le sens de rotation du corps rotatif (5.1) essentiellement en forme de croissant dans la direction de l'axe de rotation (5.2) de ce corps.

4. Machine selon la revendication 3, caractérisée en ce que des éléments de retenue (2.1), qui viennent en contact avec le dos des poissons, sont prévus dans au moins la zone d'action des outils de traitement.

5. Machine selon la revendication 4, caractérisée en ce que les éléments de retenue font partie d'un convoyeur de retenue (2) supporté par des éléments de serrage (2.2 et 2.3), un élément de retenue (2.1) étant associé à une auge (1.1) du convoyeur (1) et accompagnant ces derniers d'une manière synchrone.

6. Machine selon l'une des revendications 3 à 5, caractérisée en ce que les auges (1.1) sont agencées de manière à recevoir et entraîner les poissons dans la position correspondant à la nage, des moyens d'alignement étant prévus pour positionner les poissons en rapport avec la position de leur cavité branchiale.

7. Machine selon la revendication 6, caractérisée en ce que les moyens d'alignement comprennent une paire d'éléments en forme de fourche (1.5) logeant entre eux le poisson et qui peuvent être écartés élastiquement l'un de l'autre.

8. Machine selon la revendication 6 ou 7, caractérisée en ce que les auges (1.1) présentent, au niveau de leur fond, une fente (1.4) qui dégage la zone anale des poissons.

9. Machine selon l'une des revendications 3 à 8, caractérisée en ce que le dispositif (3) pour l'ouverture de la cavité branchiale comprend, et ce au niveau de l'ouverture anale, un couteau circulaire (3.2) possédant un sabot de guidage (3.3), qui peut être guidé dans un plan approximativement tangent à la face inférieure des auges.

10. Machine selon la revendication 9, caractérisée en ce que le sabot de guidage (3.3) possède une fente de guidage (3.4) qui s'étend dans la direction de guidage, et ce en avant du couteau circulaire (3.2) et dont l'extrémité arrière est formée par le couteau circulaire (3.2) et dont les bords limites latéraux (3.5) sont agencés sous la forme de tranchants arrondis.

11. Machine selon l'une des revendications 3 à 7, caractérisée en ce que le dispositif (4) servant à ouvrir la cavité branchiale et à sectionner la gorge et ouvrir le circuit sanguin, comprend un couteau circulaire (4.2), dont le plan de coupe est parallèle à la direction de convoyage des auges (1.1) et s'étend directement à côté de la bande des éléments en forme de fourche (1.5) des moyens d'alignement.

12. Machine selon l'une des revendications 3, 4, 5 ou 11, caractérisée par un mécanisme de couplage (3.4), qui accouple le dispositif (4) servant à ouvrir la cavité branchiale à l'élément de serrage (2.2) actif dans la zone de ce dispositif, dans le sens d'une adaptation de la profondeur de coupe du couteau rotatif (4.2) en fonction de la hauteur du dos du poisson devant être respectivement traité.

13. Machine selon l'une des revendications 3 à 5, caractérisée par un mécanisme de couplage, qui accouple le dispositif (5) servant à évider la cavité ventrale, à l'élément de serrage (2.3) agissant dans la zone de ce dispositif, dans le sens d'une adaptation du plan de travail des outils d'évidage en fonction de la hauteur du dos du poisson devant être traité.
